(19) Europäisches Patentamt
European Patent Office
Office européen des brevets

(11) **EP 4 410 452 A1**

(12) **EUROPEAN PATENT APPLICATION**
published in accordance with Art. 153(4) EPC

(43) Date of publication:
**07.08.2024 Bulletin 2024/32**

(21) Application number: **22876271.2**

(22) Date of filing: **27.09.2022**

(51) International Patent Classification (IPC):
*B22F 1/00* (2022.01)    *B22F 1/05* (2022.01)
*B22F 1/06* (2022.01)    *B22F 1/103* (2022.01)
*B22F 9/00* (2006.01)    *B22F 9/24* (2006.01)
*H01B 1/00* (2006.01)    *H01B 1/22* (2006.01)
*H01B 5/00* (2006.01)    *H01B 13/00* (2006.01)

(52) Cooperative Patent Classification (CPC):
**B22F 1/00; B22F 1/05; B22F 1/06; B22F 1/103;
B22F 9/00; B22F 9/24; H01B 1/00; H01B 1/22;
H01B 5/00; H01B 13/00;** Y02E 10/50

(86) International application number:
**PCT/JP2022/036032**

(87) International publication number:
**WO 2023/054405 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.09.2021 JP 2021158541
26.09.2022 JP 2022152974**

(71) Applicant: **DOWA Electronics Materials Co., Ltd.
Tokyo 101-0021 (JP)**

(72) Inventors:
• **FUJII, Masanori
Tokyo 101-0021 (JP)**
• **TAKAHASHI, Tetsu
Tokyo 101-0021 (JP)**
• **HIRATA, Koji
Tokyo 101-0021 (JP)**
• **NAKANOYA, Taro
Tokyo 101-0021 (JP)**

(74) Representative: **Müller-Boré & Partner
Patentanwälte PartG mbB
Friedenheimer Brücke 21
80639 München (DE)**

(54) **SILVER POWDER, ELECTROCONDUCTIVE PASTE, METHOD FOR PRODUCING SILVER POWDER, AND MIXED SILVER POWDER**

(57)    Provided are a silver powder that when used as a conductive paste, has low tendency to experience disconnection even with reduced line width and has lower volume resistivity than is conventionally the case, a conductive paste containing such a silver powder as a conductive filler, and a method of producing such a silver powder. The silver powder is a collection of silver particles that has an apparent density of not less than 8.2 $g/cm^3$ and not more than 9.2 $g/cm^3$ and a value of not less than 1.1 and not more than 1.4 for a ratio of length of a perimeter in a particle cross-section for the silver particles and length of a line circumscribing a periphery of the particle cross-section.

*FIG. 1*

**EP 4 410 452 A1**

**Description**

TECHNICAL FIELD

The present disclosure relates to a silver powder, a conductive paste, a method of producing a silver powder, and a mixed silver powder.

BACKGROUND

Conductive pastes in which silver powder is used are used for electrode wiring in solar cells and various electronic devices. For example, a method in which a firing-type conductive paste that has been produced by adding a silver powder with glass frit to an organic solvent and performing kneading thereof is used to form a specific pattern on a substrate and in which heating is subsequently performed at a temperature of 500°C or higher so as to remove the organic solvent and cause sintering of silver particles to one another to form a conductive film is widely used in the formation of internal electrodes of multilayer capacitors, electrode wiring of circuit boards, electrodes and circuits of substrates for solar cells and plasma display panels, and so forth.

Conductive pastes used in such applications are required to accommodate densification, line thinning, and the like of electrode wiring in order to accommodate miniaturization of electronic components. For this reason, it is desirable that in a used silver powder, the constituent particles of the silver powder have a suitably small particle diameter and uniform particle size and are dispersed in an organic solvent.

Silver particles having closed voids in an inner part of the particles are known as examples of particles that may form such a silver powder for a conductive paste (for example, refer to Patent Literature (PTL) 1). The presence of closed voids in an inner part of the particles enables firing even at a lower temperature (for example, 400°C).

PTL 1 describes the addition of ascorbic acid aqueous solution as a reductant to a mixed liquid of silver nitrate and citric acid to obtain silver particles that are non-nucleated and spherical bodies having a continuous open porous structure.

CITATION LIST

Patent Literature

PTL 1: WO2012/063747A1

SUMMARY

(Technical Problem)

In obtained silver particles, closed voids are present in an inner part of the particles, and moisture, organic material, or the like that is taken in during reduction remains inside of these voids. An effect of promoting sintering of particles at low temperature, for example, is thought to arise in the process of this moisture and organic material escaping to outside of the silver particles during firing. However, the presence of large voids means that a large amount of residual material is present, and thus is expected to result in a reductant and/or surface treatment agent remaining in electrode wiring even after firing and increased electrical resistivity.

Moreover, the silver particles having continuous open porous structures that are described in PTL 1 have numerous projections at the surfaces thereof, and when a silver powder formed of such silver particles is used as a paste, this results in high viscosity, the occurrence of clogging upon discharge from a screen, and the inability to accommodate line thinning due to the high tendency for disconnection to occur with line thinning.

Accordingly, the inventors aim to provide a silver powder that when used as a conductive paste, has low tendency to experience disconnection even with reduced line width and has lower volume resistivity than is conventionally the case, a conductive paste containing such a silver powder as a conductive filler, and a method of producing such a silver powder.

(Solution to Problem)

Specifically, primary features of a silver powder, a conductive paste containing a silver powder as a conductive filler, and a method of producing a silver powder according to the present disclosure for achieving the aim set forth above are as follows.

(1) A silver powder comprising a collection of silver particles, wherein

the silver powder has an apparent density of not less than 8.2 g/cm$^3$ and not more than 9.2 g/cm$^3$, and
a value of not less than 1.1 and not more than 1.4 for a ratio of length of a perimeter in a particle cross-section
for the silver particles and length of a line circumscribing a periphery of the particle cross-section.

(2) The silver powder according to the foregoing (1), having a largest void area ratio of not less than 0.1% and not more than 1.0%.
(3) The silver powder according to the foregoing (1) or (2), wherein total area of voids observed in the particle cross-section for the silver particles is 5% or more of cross-section area of the particle cross-section.
(4) The silver powder according to any one of the foregoing (1) to (3), having a volume-based median diameter of not less than 0.6 μm and not more than 2.0 μm.
(5) The silver powder according to any one of the foregoing (1) to (4), having an ignition loss of not less than 1.0 wt% and not more than 3.0 wt%.
(6) The silver powder according to any one of the foregoing (1) to (5), having a silver crystallite size of not less than 10 nm and not more than 28 nm.
(7) A conductive paste comprising the silver powder according to any one of the foregoing (1) to (6) as a conductive filler.
(8) A method of producing a silver powder comprising:

a feedstock mixing step of mixing a silver aqueous solution, a polycarboxylic acid, and a surface treatment agent to obtain a mixed liquid;
a particle precipitation step of adding a reductant to the mixed liquid to cause precipitation of silver particles;
a drying step of drying a collection of the silver particles to obtain a dry powder; and
a surface smoothing step of partially smoothing surfaces of the silver particles after drying to obtain a silver powder, wherein
in the surface smoothing step, the surfaces of the silver particles are smoothed until apparent density is not less than 8.2 g/cm$^3$ and not more than 9.2 g/cm$^3$ and a ratio of length of a perimeter in a particle cross-section and length of a line circumscribing a periphery of the particle cross-section is not less than 1.1 and not more than 1.4.

(9) A method of producing a silver powder comprising:

a feedstock mixing step of mixing a silver aqueous solution, a polycarboxylic acid, and a particle size adjuster to obtain a mixed liquid;
a particle precipitation step of adding a reductant to the mixed liquid to cause precipitation of silver particles;
a drying step of drying a collection of the silver particles to obtain a dry powder; and
a surface smoothing step of partially smoothing surfaces of the silver particles after drying to obtain a silver powder, wherein
in the surface smoothing step, the surfaces of the silver particles are smoothed until apparent density is not less than 8.2 g/cm$^3$ and not more than 9.2 g/cm$^3$ and a ratio of length of a perimeter in a particle cross-section and length of a line circumscribing a periphery of the particle cross-section is not less than 1.1 and not more than 1.4.

(10) The method of producing a silver powder according to the foregoing (8) or (9), wherein a liquid temperature in the particle precipitation step is not lower than 10°C and not higher than 35°C.
(11) The method of producing a silver powder according to the foregoing (8) or (9), wherein the dry powder prior to the surface smoothing step has an apparent density of less than 9.2 g/cm$^3$ and a value of more than 1.4 for a ratio of length of a particle perimeter relative to length of a line circumscribing a particle periphery in a particle cross-section.
(12) A mixed silver powder in which the silver powder according to any one of the foregoing (1) to (6) and a silver powder having an apparent density of more than 9.2 g/cm$^3$ are mixed.
(13) A conductive paste comprising the mixed silver powder according to the foregoing (12) as a conductive filler.

(Advantageous Effect)

According to the present disclosure, it is possible to provide a silver powder that when used as a conductive paste, has low tendency to experience disconnection even with reduced line width and has lower volume resistivity than is conventionally the case, a conductive paste containing such a silver powder as a conductive filler, and a method of producing such a silver powder.

BRIEF DESCRIPTION OF THE DRAWINGS

In the accompanying drawings:

FIG. 1 illustrates a particle perimeter and a line circumscribing a particle periphery in an SEM observation image of a particle cross-section according to a present embodiment;

FIG. 2 is a schematic diagram illustrating a particle perimeter and a convex hull perimeter in a particle cross-section according to a present embodiment;

FIG. 3 is a schematic diagram illustrating a particle perimeter and a line circumscribing a particle periphery in a particle cross-section according to a present embodiment;

FIG. 4 is a $\times$ 100,000 SEM observation image of a silver particle surface in a silver powder of Example 1;

FIG. 5 is a $\times$ 100,000 SEM observation image of a silver particle cross-section in the silver powder of Example 1;

FIG. 6 is a $\times$ 100,000 SEM observation image of a silver particle surface in a silver powder of Example 2;

FIG. 7 is a $\times$ 100,000 SEM observation image of a silver particle cross-section in the silver powder of Example 2;

FIG. 8 is a $\times$ 100,000 SEM observation image of a silver particle surface in a silver powder of Comparative Example 1;

FIG. 9 is a $\times$ 100,000 SEM observation image of a silver particle cross-section in the silver powder of Comparative Example 1;

FIG. 10 is a $\times$ 100,000 SEM observation image of a silver particle surface in a silver powder of Comparative Example 2;

FIG. 11 is a $\times$ 100,000 SEM observation image of a silver particle cross-section in the silver powder of Comparative Example 2;

FIG. 12 is a $\times$ 40,000 SEM observation image of a silver particle cross-section in a silver powder of a Conventional Example;

FIG. 13 is a $\times$ 60,000 SEM observation image of a silver particle cross-section in a silver powder of Example 3; and

FIG. 14 is a $\times$ 50,000 SEM observation image of a silver particle cross-section in a silver powder of Example 4.

DETAILED DESCRIPTION

The following describes a silver powder, a conductive paste, and a method of producing a silver powder according to a present embodiment with reference to the drawings. Note that the following embodiment is for providing a more specific description so as to facilitate understanding of the essence of the present disclosure and does not limit the present disclosure unless specifically stipulated.

The silver powder according to the present embodiment is outlined below. The silver powder according to the present embodiment is a collection of silver particles that has an apparent density of not less than 8.2 g/cm$^3$ and not more than 9.2 g/cm$^3$. A ratio of the length of a perimeter in a particle cross-section for silver particles in the silver powder and the length of a line circumscribing a perimeter of the particle cross-section is not less than 1.1 and not more than 1.4.

One example of a method of producing the above-described silver powder that is a collection of silver particles includes: a feedstock mixing step of mixing a silver aqueous solution, a polycarboxylic acid, and a surface treatment agent to obtain a mixed liquid; a particle precipitation step of adding a reductant to the mixed liquid to cause precipitation of silver particles; a drying step of drying a collection of the silver particles to obtain a dry powder; and a surface smoothing step of partially smoothing surfaces of the silver particles after drying to obtain a silver powder. In the surface smoothing step, the surfaces of the dried silver particles are smoothed until apparent density is not less than 8.2 g/cm$^3$ and not more than 9.2 g/cm$^3$ and a ratio of the length of a perimeter in a particle cross-section and the length of a line circumscribing a periphery of the particle cross-section is not less than 1.1 and not more than 1.4. Moreover, a particle size adjuster may be added instead of the surface treatment agent in the feedstock mixing step.

In a case in which the apparent density of the silver powder is less than 8.2 g/cm$^3$, a problem of increased electrical resistance of wiring after sintering may arise when the silver powder is used as a conductive paste as a result of the silver powder being strongly influenced by a subsequently described reductant and/or surface treatment agent. In a case in which the apparent density of the silver powder is more than 9.2 g/cm$^3$, it is difficult to draw fine wiring when the silver powder is used as a conductive paste. Moreover, in a case in which the ratio of the length of a perimeter in a particle cross-section for fine silver particles in the silver powder and the length of a line circumscribing a periphery of the particle cross-section is less than 1.1, it is difficult to reduce line width after firing. Furthermore, in a case in which this ratio is more than 1.4, this results in poor printing performance when the silver powder is used as a conductive paste.

The following provides a detailed description of fine silver particles and a method of producing the same according to the present embodiment.

(Apparent density)

The apparent density in the present embodiment is the apparent density of the silver particles in the silver powder. The apparent density in the present embodiment is measured by a dry-type automatic density meter (also referred to as a true density analyzer) using helium gas. Specifically, the volume of a powder (silver powder that is a collection of silver particles in the present embodiment) is measured from the gas volume when the inside of a vessel is filled with helium gas until a fixed pressure is reached, and the weight of the powder is divided by this volume to calculate the apparent density. During the above, the helium gas reaches spaces of irregularities at the surfaces of particles in the powder and spaces in gaps between particles but does not reach closed spaces (subsequently described voids) inside of the particles that are not externally connected. Accordingly, the true density is measured in a case in which particles in the powder do not include voids in an inner part thereof, whereas the apparent density of the powder is smaller than the true density (true density of silver in the present embodiment) in a case in which particles in the powder do include closed voids in an inner part thereof. Therefore, although the true density of silver is 10.5 $g/cm^3$, the apparent density of the silver powder according to the present embodiment is not less than 8.2 $g/cm^3$ and not more than 9.2 $g/cm^3$ as a result of the silver particles in the silver powder including voids in an inner part thereof. Moreover, the apparent density is more preferably not less than 8.5 $g/cm^3$ and not more than 9.2 $g/cm^3$, and even more preferably not less than 8.7 $g/cm^3$ and not more than 9.2 $g/cm^3$. It should be noted that as described above, the "apparent density" in the present embodiment differs from the "bulk density", which indicates the degree of packing of a powder in a fixed volume.

(Ratio of length of perimeter in particle cross-section and length of line circumscribing periphery of particle cross-section)

The ratio of the length of a perimeter (particle perimeter 10) in a particle cross-section and the length of a line 20 circumscribing a periphery of the particle cross-section in the present embodiment (note that this ratio is also referred as L1/L2) is an indicator of the degree of unevenness of the surfaces of silver particles in the silver powder. The length of the perimeter in the particle cross-section (hereinafter, also referred to as length L1) is the total length of the perimeter of the particle cross-section. The line 20 circumscribing the periphery of the particle cross-section is a line that in the case of a particle surface where irregularities are present, is drawn such as to flatten a recessed part where a section drawn by the particle perimeter 10 recedes deeply inward in the particle. For example, when there are consecutive irregularities, the line joins recessed part apexes as a straight line such as to close the recessed part. The length of the line 20 circumscribing the periphery of the particle cross-section (hereinafter, also referred to as length L2) is the total length of this circumscribing line. Moreover, the cross-section area of the particle is the area of a range surrounded by the particle perimeter 10.

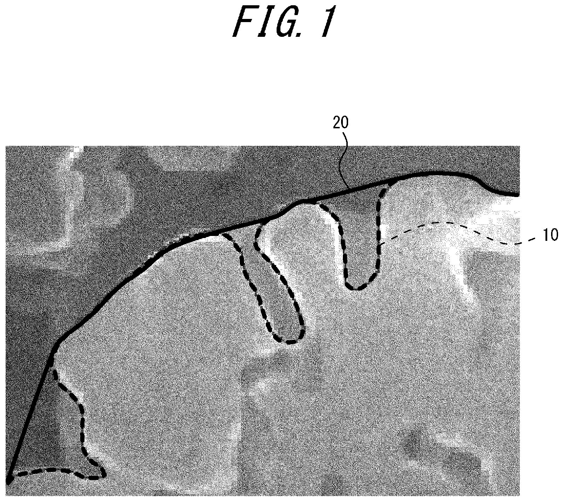

FIG. 1 illustrates a method of measuring the lengths of the particle perimeter 10 and the line 20 circumscribing the periphery of the particle cross-section. Measurement of these lengths is performed through SEM observation of the particle cross-section. The SEM observation is performed by taking an SEM image at a magnification such that the entire cross-section of one particle fits into the imaging range of the SEM image. In the present example, the particle diameter (diameter of a particle) is approximately 1 $\mu$m to 2 $\mu$m as described further below, and thus measurement is performed based on an image taken at $\times$100,000 magnification. The measurement is performed with respect to the particle cross-section without taking into account depth of the image. When it is possible to observe a cross-section near the center of a silver particle, this results in a larger cross-section area. Therefore, a silver particle having a large cross-section is selected in a single arbitrarily selected viewing field, and the particle cross-section thereof is measured. The lengths may be measured by tracing a contour of the particle cross-section using image analysis software or the like, for example.

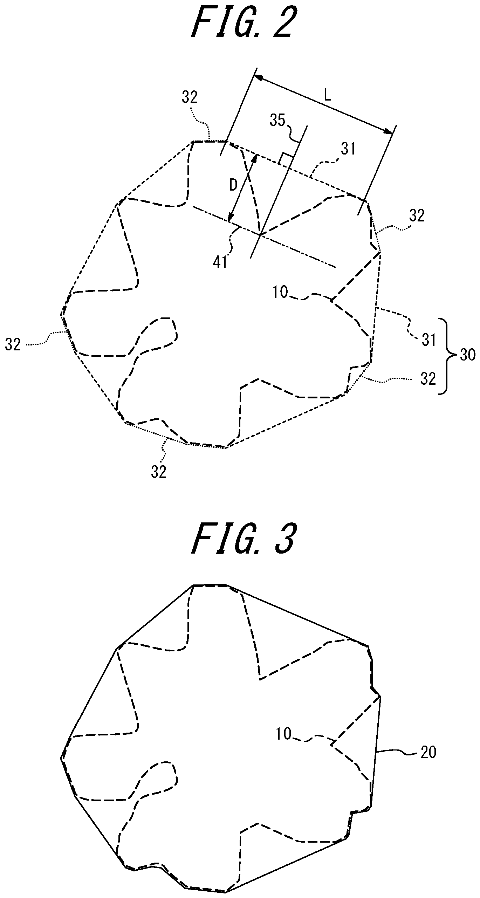

The line 20 circumscribing the periphery of the particle cross-section is composed of part of the aforementioned particle perimeter 10 and part of a subsequently defined convex hull perimeter 30. The following describes a method of determining the line 20 circumscribing the periphery of the particle cross-section using FIG. 2 and FIG. 3.

The convex hull perimeter 30 is a line that runs along protruding parts on the periphery of the silver particle cross-section (particle perimeter 10) such as to surround the entire particle. In other words, the convex hull perimeter 30 is a line that in the case of a recessed part between protruding parts where there are consecutive irregularities on the particle perimeter 10, is drawn as a straight line bridging between the protruding parts, and in the case of a curved surface of a protruding part, is drawn along the curved surface such as to surround the entire particle. The convex hull perimeter 30 is drawn as a line that is joined such as to close each recessed part of the silver particle cross-section with a straight line. The convex hull perimeter 30 coincides with the particle perimeter 10 at curved surface sections of protruding parts of the particle perimeter 10.

In the case of a deep recessed part on the particle perimeter 10, the convex hull perimeter 30 (convex hull perimeter 31 of a deep recessed part) is adopted as the line 20 circumscribing the periphery of the particle cross-section in the present embodiment, and in the case of a shallow recessed part (convex hull perimeter 32 of a shallow recessed part) on the particle perimeter 10, the particle perimeter 10 is adopted as the line 20 circumscribing the periphery of the particle cross-section in the present embodiment. In other words, although the convex hull perimeter 30 is not adopted at all recessed parts, the convex hull perimeter 30 is adopted as the line 20 circumscribing the periphery of the particle cross-section at a recessed part (convex hull perimeter 31 of a deep recessed part) having a depth such that when a line 41 parallel to a straight line of the convex hull perimeter 30 is drawn such as to be in contact with one point of the particle perimeter 10 in the recessed part, a distance D between the parallel lines is not less than 1/3 of the length of the straight line of the convex hull perimeter 30. Note that the distance D is the distance in a direction along a perpendicular line 35 relative to the convex hull perimeter 30.

In the case of a shallow recessed part (convex hull perimeter 32 of a shallow recessed part) having a depth such that the distance between the parallel lines is less than 1/3 of the length of the straight line of the convex hull perimeter 30, the particle perimeter 10 is adopted as the line 20 circumscribing the periphery of the particle cross-section. Note that the convex hull perimeter 30 coincides with the particle perimeter 10 at curved surface sections of protruding parts of the particle perimeter 10, and thus the particle perimeter 10 is adopted as the line 20 circumscribing the periphery thereat.

The particle perimeter 10 is indicated by a dashed line and the line 20 circumscribing the periphery of the particle cross-section is indicated by a solid line as an SEM observation image in FIG. 1 and as a schematic diagram in FIG. 3. The ratio of the length of the particle perimeter 10 and the length of the line 20 circumscribing the periphery of the particle cross-section approaches 1 with decreasing number and size of irregularities at the particle surface. The value of this ratio increases with increasing number and size of irregularities at the particle surface.

(Void cross-section area)

The cross-section area of voids in the present embodiment is an indicator of the amount and size of voids included inside of a particle. In the present embodiment, a closed hole that is not externally connected in a particle cross-section is defined as a "void". Holes that are externally connected at the periphery of the particle in the particle cross-section are regarded as irregularities at the particle surface and are taken to be the previously described particle perimeter 10 rather than being included among voids. The term "void" refers to a hole that is present inside of a region surrounded by the particle perimeter 10. As previously described, the presence of such voids results in particles having a smaller apparent density.

The largest area and total area of voids in the particle cross-section may be determined based on image analysis. For example, measurement may be performed by tracing contours of voids using image analysis software or the like. The number of particles used in measurement is preferably 2 or more, and more preferably 5 or more.

In the following, the cross-section area of a void having a largest cross-section area among voids present in the cross-section of an individual particle serving as measurement subject is referred to as the "cross-section area of a largest void". A value obtained by dividing the sum of cross-section areas of largest voids among voids observed in the cross-sections of individual particles serving as measurement subjects by the sum of cross-section areas of these particle cross-sections is referred to as a "largest void area ratio" (%) of the silver powder in the present disclosure. For example, in a case in which five silver particles are taken to be measurement subjects, the cross-section area of a largest void is determined for each of these five silver particles, and a value obtained by dividing the sum of these cross-section areas of largest voids by the sum of the cross-section areas of the five silver particles serving as measurement subjects is taken to be the largest void area ratio. The largest void area ratio is preferably within a range of not less than 0.1% and not more than 1.0%, and more preferably within a range of not less than 0.5% and not more than 0.9%. Note that the largest cross-section area among the cross-section areas of largest voids in the particles serving as measurement subjects (hereinafter, referred to as the "maximum value of cross-section areas of largest voids") is preferably within a range of not less than 0.1% and not more than 1.5% relative to the cross-section area of a silver particle including that void. No specific limitations are placed on the number of voids that are observed in the particle cross-section. When the largest void area ratio is 1.0% or less, this can reduce the likelihood of a large void expanding during heating and thereby reducing density of an electrode film and causing disconnection.

In the following, the sum of the cross-section areas of voids that are included in a single particle cross-section is referred to as the total void area. An average value for all measured particles is used as a value adopted as an evaluation result. The total void area is, as an average value, preferably 5% or more, and more preferably 6% or more relative to the cross-section area of a silver particle including those voids (area of a range surrounded by the particle perimeter 10). Although no specific limitations are placed on the upper limit, the total void area can be set as 20% or less, and may be 11% or less, for example. Moreover, a ratio of the total void area relative to the particle cross-section area is referred to as the "void ratio" (%). When the total void area is 5% or more, an effect of promoting firing can be expected during firing of the conductive paste according to the present disclosure.

(Median diameter)

The particle size distribution of the silver powder in the present embodiment is taken to be a volume-based particle size distribution. In other words, the median diameter (particle diameter corresponding to a cumulative value of 50%; also referred to as D50) is a volume-based value. The particle size distribution can be measured using a laser diffraction particle size analyzer or the like. The median diameter of the silver powder according to the present embodiment is preferably not less than 0.6 $\mu$m and not more than 2.0 $\mu$m, and more preferably not less than 1.0 $\mu$m and not more than 1.8 $\mu$m. This is because a median diameter of less than 0.6 $\mu$m may cause an excessive increase of viscosity of a conductive paste and make the conductive paste difficult to use, whereas a median diameter of more than 2.0 $\mu$m may cause poor discharge of a conductive paste from a screen and result in the occurrence of a printing fault.

(Ignition loss)

Ignition loss (hereinafter, also referred to as Ig-Loss) is measured through heating to a specific temperature. The silver particles in the silver powder according to the present embodiment have many voids in an inner part thereof, and thus are in a state in which a large amount of a reductant, surface treatment agent, and/or the like has remained inside of the particles during precipitation of the silver particles. By measuring Ig-Loss, it is possible to estimate the amount of the reductant and/or surface treatment agent that has been taken into the inner part of the particles. Ig-Loss is preferably not less than 1.0 weight% and not more than 3.0 weight%, and more preferably not less than 1.4 weight% and not more than 2.5 weight%. When the range for Ig-Loss is any of the ranges set forth above, contraction of the silver particles and bonding between silver particles are promoted when the reductant and/or surface treatment agent is released from inside of the silver particles during firing of a paste to form electrode wiring. This makes it possible to reduce the line width after firing. Note that in a case in which Ig-Loss is more than 3.0 weight%, there is high likelihood that the reductant and/or surface treatment agent will remain in electrode wiring even after firing and thereby increase electrical resistivity.

(Crystallite size)

The crystallite size (hereinafter, also referred to as Dx) is determined by the Scherrer equation ($D_{hk1} = K\lambda/\beta\cos\theta$) using an X-ray diffractometer. Moreover, peak data for a Miller index (111) plane is used in calculation. Dx is preferably not less than 10 nm and not more than 28 nm, more preferably not less than 13 nm and not more than 18 nm, and even more preferably not less than 14 nm and not more than 16 nm.

When Dx is small in addition to the features described above, it is possible to lower the sintering start temperature during firing of a paste to form electrode wiring, to promote sintering between crystals, and to reduce line width and electrical resistance of the electrode wiring after firing.

The silver particles in the silver powder according to the present disclosure are a spherical silver powder for which a ratio (aspect ratio) of a major axis (maximum distance between two parallel lines sandwiching a silver particle) and a minor axis (minimum distance between two parallel lines sandwiching a silver particle) in a particle cross-section such as previously described has an average value (average aspect ratio) of not less than 1.0 and not more than 1.5. The silver particles have irregularities at the surfaces thereof and thus rarely appear as a perfect circle even in an observed cross-section. The silver particles have a form more like a partially squashed sphere rather than a perfect sphere after undergoing smoothing processing as compared to before smoothing processing.

(Conductive paste)

The conductive paste contains the silver powder according to the present embodiment as a conductive filler. In addition to the silver powder, the conductive paste preferably contains a solvent and a binder, and may further contain other components as necessary. The solvent, binder, and so forth may be selected as appropriate depending on the mode of use.

(Production method of silver powder)

The following provides a detailed description of the method of producing a silver powder according to the present embodiment. The method of producing a silver powder according to the present embodiment includes a feedstock mixing step, a particle precipitation step, a recovery step, and a surface smoothing step as previously described.

(Feedstock mixing step)

The feedstock mixing step is a step of obtaining a mixed liquid that serves as a feedstock for obtaining the subsequently described silver particles. The mixed liquid can be a mixed liquid obtained by mixing a silver aqueous solution, a polycarboxylic acid, and a surface treatment agent, or can be a mixed liquid obtained by mixing a silver aqueous solution, a polycarboxylic acid, and a particle size adjuster.

The silver aqueous solution is an aqueous solution that contains silver ions. The silver aqueous solution can have silver nitrate, silver perchlorate, silver acetate, silver oxalate, silver chlorate, silver hexafluorophosphate, silver tetrafluoroborate, silver hexafluoroarsenate, or silver sulfate as a silver ion source so long as it is a silver salt that is soluble in water. The silver aqueous solution may preferably be a silver nitrate aqueous solution, for example.

So long as the silver aqueous solution and the polycarboxylic acid are uniformly mixed by an agitator inside of a vessel, no specific limitations are placed on the mixing time. The polycarboxylic acid is preferably one or more polycarboxylic acids selected from the group consisting of citric acid, malic acid, maleic acid, and malonic acid. The additive amount of the polycarboxylic acid is preferably not less than 20 mass% and not more than 100 mass% relative to silver.

First, the silver aqueous solution and the polycarboxylic acid are mixed, and then a surface treatment agent is added. The surface treatment agent may be added at the same timing as mixing of the silver aqueous solution and the polycarboxylic acid. A particle size adjuster may be added instead of a surface treatment agent, and addition of a surface treatment agent may be performed after addition of a reductant.

The surface treatment agent may be a fatty acid such as lauric acid, stearic acid, oleic acid, linoleic acid, or ricinoleic acid, or may be an amino acid or an azole such as benzotriazole. The additive amount of the surface treatment agent is preferably not less than 0.1 mass% and not more than 2.0 mass% relative to the obtained silver particles.

The particle size adjuster may be a polymeric amine. The polymeric amine according to the present disclosure is a polymer that includes either or both of a primary amine ($-NH_2$) and a secondary amine ($=NH$). Specific examples of preferable polymeric amines according to the present disclosure include amino compounds and imino compounds. Of these polymeric amines, PEI (polyethyleneimine) is preferable. In particular, PEI, which is an imine compound, has a network structure including both a primary amine and a secondary amine in molecules thereof and provides preferable effects in the present disclosure. The additive amount of the particle size adjuster is preferably not less than 0.1 mass% and not more than 2.0 mass% relative to the obtained silver particles.

(Particle precipitation step)

The particle precipitation step is a step of adding a reductant to the mixed liquid to cause precipitation of silver particles. The reductant is added to the mixed liquid after addition of the surface treatment agent or particle size adjuster in the previously described feedstock mixing step. A reductant formed of ascorbic acid or an isomer thereof is used as the reductant.

The liquid temperature during reductant addition is preferably not lower than 10°C and not higher than 35°C, and more preferably not lower than 15°C and not higher than 29°C. It may not be possible to recover silver particles due to insufficient progression of reduction when a low temperature is adopted. Moreover, the void size and Dx of the obtained silver particles may become excessively large when a high temperature is adopted.

(Addition of surface treatment agent after reductant addition)

A surface treatment agent may be added after reductant addition. The surface treatment agent may be a fatty acid such as lauric acid, stearic acid, oleic acid, linoleic acid, or ricinoleic acid, or may be an amino acid or an azole such as benzotriazole.

(Drying step)

The drying step is a step of obtaining a dry powder from a suspension containing a collection of silver particles that is obtained in the particle precipitation step. A filtration step and a water washing step may be included prior to the drying step.

The filtration may be performed by any method. In the water washing step, it is preferable that the electrical conductivity of washings is measured and that water washing is repeated until the electrical conductivity reaches 0.5 mS/m or less. A dryer such as a forced circulation air dryer, a vacuum dryer, or an airflow dryer can be used in the drying step. Since the internal structure of silver particles obtained by the particle precipitation step includes many voids, silver crystals inside of the particles are split, which thereby suppresses an increase of crystal size due to heating in the drying step. The silver particles after drying have an apparent density of less than 9.2 $g/cm^3$ and a value of more than 1.4 for a ratio of the length of a particle perimeter 10 relative to the length of a line 20 circumscribing a particle periphery in a particle cross-section.

(Surface smoothing step)

The surface smoothing step is a step of partially smoothing surfaces of the dried silver particles obtained by the drying step. "Smoothing" of a particle surface means reducing unevenness of the particle surface. "Partially" smoothing a particle surface means that some externally connected holes observed at the periphery of a particle in the dry powder remain and that irregularities are not completely removed (i.e., L1/L2 = 1 is not reached).

In the surface smoothing step, an agitator fluidizes the dry powder and causes particles to flow and collide with one another so as to cause plastic deformation of the surfaces of the particles and reduce unevenness of the surfaces. It is preferable to use an electric mill having an agitator that rotates at high speed. During particle collisions, it is thought that voids inside of the particles are partially squashed, and the void volume is reduced. The surfaces of the dried silver particles are smoothed in the surface smoothing step until the apparent density is not less than 8.2 g/cm$^3$ and not more than 9.2 g/cm$^3$ and the ratio of the length of a perimeter in a particle cross-section and the length of a line circumscribing the periphery of the particle cross-section is not less than 1.1 and not more than 1.4. A classification step for removing scraps and coarse particles may be added at this point.

EXAMPLES

The following describes Examples of the silver powder, conductive paste, and method of producing a silver powder.

[Experimental Example 1]

(Example 1)

Silver nitrate aqueous solution in an amount of 152.7 g (silver content: 32.2 wt%) was diluted with 3,235 g of pure water. The diluted silver nitrate aqueous solution was stirred while adding 433.5 g of citric acid aqueous solution (citric acid concentration: 20 wt%). Thereafter, 6.0 g of a surface treatment agent (stearic acid diluted 10-fold with ethanol) was added. The liquid temperature was then set to 15°C, and ascorbic acid aqueous solution (40.2 g of ascorbic acid reagent diluted with 160.6 g of pure water) was added as a reductant and was stirred for 10 minutes to yield a suspension containing silver particles.

Next, the stirring was stopped, and the suspension containing the silver particles was filtered using a Nutsche filter. The filtered off silver particles were water washed by passing washing water through the obtained silver particles until the electrical conductivity of washings reached 0.5 mS/m or less. The washed silver particles were subsequently vacuum dried at 73°C for 10 hours to obtain a dry powder.

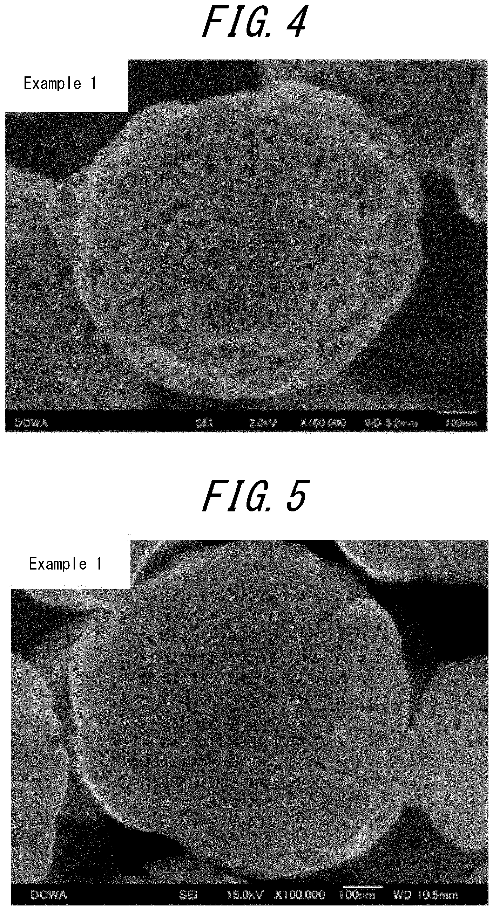

In addition, a surface smoothing step was performed by loading the dry powder into a sample mill (SK-M10 produced by Kyoristu Riko) and performing two repetitions of stirring for 30 seconds so as to obtain a silver powder as a collection of silver particles according to Example 1. SEM observation images at ×100,000 for a particle surface and cross-section of a silver particle in the obtained silver powder are presented in FIG. 4 and FIG. 5.

(Example 2)

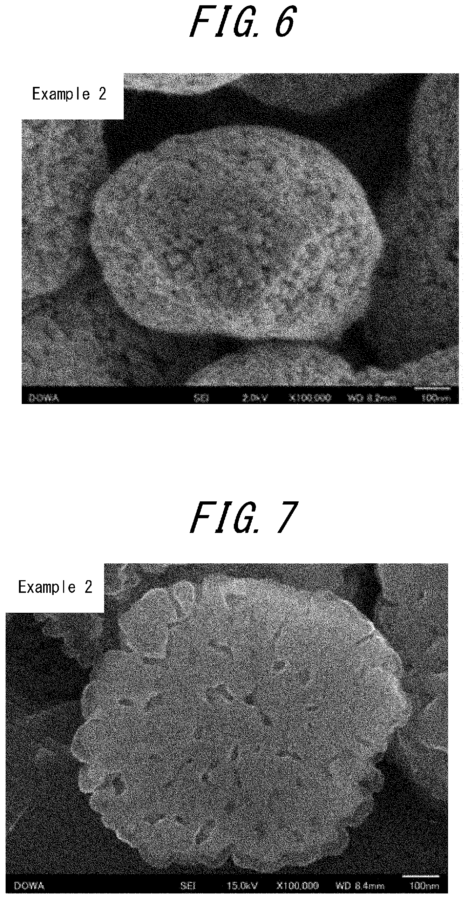

A silver powder according to Example 2 was obtained in the same way as in Example 1 with the exception that the liquid temperature was set as 28°C. SEM observation images at ×100,000 for a particle surface and cross-section of a silver particle in the obtained silver powder are presented in FIG. 6 and FIG. 7.

(Comparative Example 1)

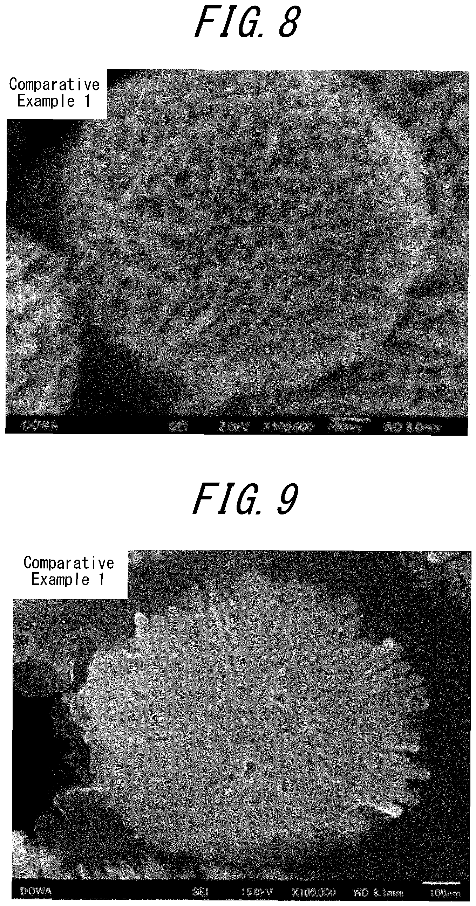

A silver powder according to Comparative Example 1 was obtained in the same way as in Example 1 with the exception that the surface smoothing step was not performed. SEM observation images at ×100,000 for a particle surface and cross-section of a silver particle in the obtained silver powder are presented in FIG. 8 and FIG. 9.

(Comparative Example 2)

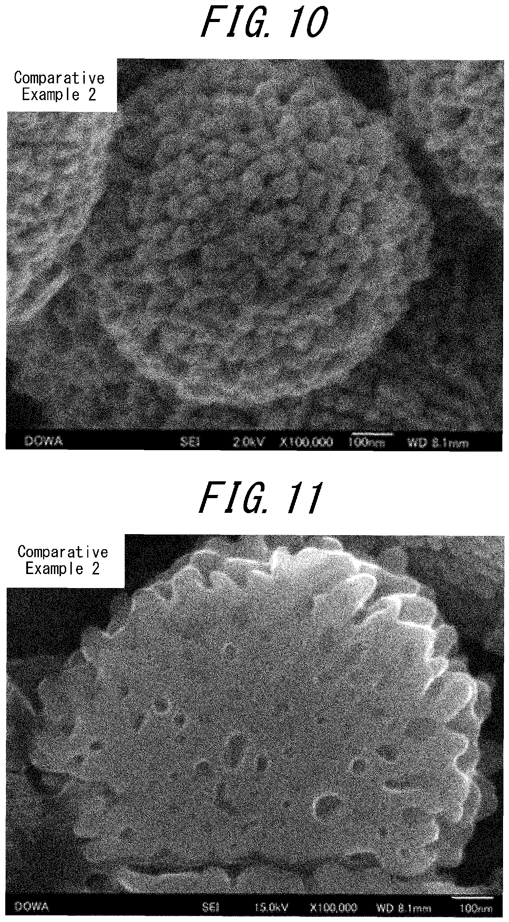

A silver powder according to Comparative Example 2 was obtained in the same way as in Example 2 with the exception that the surface smoothing step was not performed. SEM observation images at ×100,000 for a particle surface and cross-section of a silver particle in the obtained silver powder are presented in FIG. 10 and FIG. 11.

(Conventional Example)

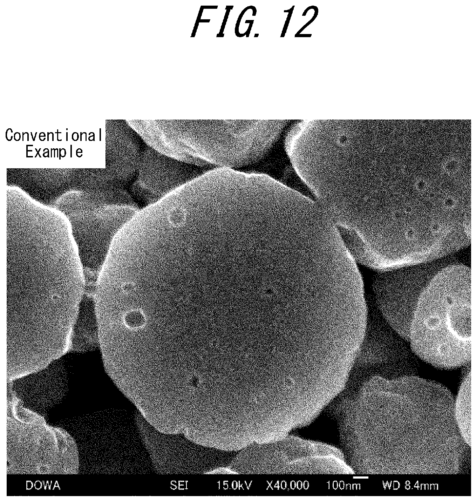

AG-4-8F produced by DOWA HIGHTECH CO., LTD. was used as a Conventional Example of a silver powder used in a conductive paste. An SEM observation image at ×40,000 for a particle cross-section of a silver particle in the silver powder is presented in FIG. 12.

(Silver powder evaluation)

Evaluations of silver powders were performed as described below.

Apparent density was measured using a dry-type automatic density meter. First, 10 g to 20 g of a silver powder sample was loaded into a 10 cc platinum crucible, and the weight of the loaded silver powder was precisely measured. The sample was then subjected to measurement using a dry-type automatic density meter (AccuPyc II 1340 produced by Micrometrics). The volume of the powder was measured from the volume of gas when the crucible was filled with helium gas until a fixed pressure was reached, and the apparent density was calculated by dividing the weight of the silver powder by the measured volume of the powder.

In measurement of Ig-Loss, a sample (2 g) of a silver powder was precisely weighed (weighed value: w1), was loaded into a magnetic crucible, and was heated to 800°C. The temperature was held at 800°C for 30 minutes so as to allow sufficient time until the quantity of the sample was constant. Thereafter, the sample was cooled and was reweighed (weighed value: w2). The ignition loss was determined by substituting w1 and w2 into the following equation (equation 1).

$$\text{Ignition loss (mass\%)} = (w1 - w2)/w1 \times 100 \cdots (\text{Equation 1})$$

Measurement of a particle size distribution was performed using a laser diffraction particle size analyzer (MICROTRAC Particle Size Analyzer MT-3300EXII produced by MicrotracBEL Corp.). Directly prior to measurement, 0.3 g of a silver powder was added to 40 mL of isopropyl alcohol and was dispersed for 5 minutes using an ultrasonic cleaner with a power of 45 W. A particle size distribution of silver particles in the resultant dispersion was measured. A volume-based value was adopted as the median diameter (particle diameter corresponding to a cumulative value of 50%; also referred to as $D_{50}$).

The crystallite size (Dx) was determined by the Scherrer equation ($D_{hk1} = K\lambda/\beta\cos\theta$) from peak data for a Miller index (111) plane using an X-ray diffractometer. In this equation, $D_{hk1}$ is the magnitude of crystallite size (crystallite size in direction perpendicular to hkl) (nm), $\lambda$ is the wavelength (nm) of characteristic X-rays (0.17889 nm when using a Co target), $\beta$ is the diffraction line broadening (rad) according to crystallite size (expressed using full width at half maximum), $\theta$ is the Bragg angle (rad) of the angle of diffraction (angle when angle of incidence and angle of reflection are equal; angle of peak top used), and K is the Scherrer constant (K = 0.94).

Next, cross-sectional observation of silver particles in a silver powder was performed. First, each sample was hardened in resin, was polished by a cross section polisher so as to expose a silver particle cross-section, and each particle cross-section was observed at ×100,000 using an FE-SEM (JSM-6100 produced by JEOL Ltd.). Two particle cross-sections were arbitrarily selected from among particle cross-sections where it was thought that a cross-section near the center of a silver particle could be observed. With respect to each of these particle cross-sections, image analysis software (Particle Size Distribution Analysis Software Mac-View produced by Mountech Co., Ltd.) was used to measure the previously described lengths L1 and L2, the area surrounded by a particle perimeter 10 (i.e., the particle cross-section area), the area of each void inside of the particle, and the number of voids inside of the particle. The cross-section area of a largest void in each particle was selected from these measured values, the maximum value among the selected cross-section areas (i.e., the "maximum value of cross-section areas of largest voids") was recorded, and the "largest void area ratio" was calculated. Moreover, the ratio of lengths (L1/L2) and the void ratio were calculated as average values.

(Conductive paste evaluation)

Evaluations of characteristics of conductive pastes were performed as described below.

First, 89.7 mass% of an obtained silver powder, 2.0 mass% of glass frit (FSGCO2 produced by Okamoto Glass Co., Ltd.), 0.4 mass% of oleic acid as a dispersant, 0.2 mass% of a mixture of ethyl cellulose and hydroxypropyl cellulose as a resin, 6.2 mass% of a mixture of terpineol, texanol, and butyl carbitol acetate as a solvent, 1.1 mass% of hydrogenated castor oil as a thixotropic agent, and 0.4 mass% of dimethylpolysiloxane as a line shape retaining agent were kneaded in a propeller-less planetary stirring and defoaming device (AR250 produced by Thinky Corporation), were then kneaded by a three-roll mill (80S produced by Exakt Technologies Inc.), and were subsequently passed through a mesh having a mesh count of 500 $\mu$m to obtain a conductive paste.

The obtained conductive paste was used to print electrode wiring on a silicon wafer by screen printing for each of line widths of 18 $\mu$m, 20 $\mu$m, 22 $\mu$m, 24 $\mu$m, 26 $\mu$m, 28 $\mu$m, and 30 $\mu$m using a test screen having these widths. The occurrence or absence of disconnection for each line width was observed by luminous observation of electroluminescence, and the thinnest line width at which disconnection did not occur (referred to as the printable line width) was confirmed.

Next, the conductive paste was used to performed printing of wiring with a width of 500 μm and a length of 37.5 mm on a silicon wafer by screen printing. The obtained wiring was dried under conditions of 10 minutes at 200°C using an air circulation dryer (DK-43 produced by Yamato Scientific Co., Ltd.) and was subsequently fired under conditions of a peak temperature of 770°C and an in-out time of 21 seconds using a high-speed firing test furnace produced by NGK Insulators, Ltd. to produce a conductive film. A digital multimeter (MCP-T410 produced by Mitsubishi Chemical Corporation) was used to measure a resistance value for the obtained conductive film. Thereafter, the difference between a section where wiring had not been printed on the substrate and a section where wiring had been printed was measured using a surface roughness meter (SURFCOM 480B produced by Tokyo Seimitsu Co., Ltd.) and was taken to be the film thickness of the wiring. The volume resistivity of the conductive film was calculated from the determined resistance value and film thickness using the following calculation equation (Equation 2).

$$\text{Volume resistivity } (\Omega \cdot \text{cm}) = \text{Resistance value } (\Omega) \times \text{Film thickness (cm)} \times \text{Line width (cm)} / \text{Line length (cm)} \quad \text{(Equation 2)}$$

In addition, the surface roughness meter was used to measure the film thickness and line width of the conductive film at five locations, and an average value of an aspect ratio (film thickness/line width) of the conductive film was calculated.

Evaluations results for silver powders and evaluation results for pastes described above are shown in Tables 1 and 2.

[Table 1]

| | Reaction temperature | Dry surface processing | Median diameter ($D_{50}$) | Ig-Loss | Apparent density | Crystallite size (Dx) | Length L1 | Length L2 | L1/L2 (ratio of lengths) |
|---|---|---|---|---|---|---|---|---|---|
| | °C | - | μm | wt% | g/cm$^3$ | nm | μm | μm | - |
| Example 1 | 15 | Yes | 1.1 | 2.5 | 8.9 | 14.6 | 2.9 | 2.7 | 1.1 |
| Example 2 | 28 | Yes | 1.6 | 1.4 | 9.2 | 15.8 | 3.0 | 2.6 | 1.2 |
| Comparative Example 1 | 15 | No | 1.0 | 2.5 | 8.8 | 14.0 | 8.1 | 3 | 2.7 |
| Comparative Example 2 | 28 | No | 1.3 | 1.4 | 8.7 | 14.8 | 4.8 | 3.3 | 1.5 |
| Conventional Example | 28 | Yes | 2.0 | 0.7 | 9.8 | 33.2 | 4.3 | 4.3 | 1.0 |

[Table 2]

| | Maximum value of cross-section areas of largest voids | Ratio of void in left column relative to particle cross-section area | Largest void area ratio | Particle cross-section area (average value) | Void ratio (average value) | Number of voids | Silver content in paste | Printable line width | Aspect ratio | Volume resistivity |
|---|---|---|---|---|---|---|---|---|---|---|
| | 2 μm | % | % | 2 μm | % | Voids | % | μm | - | μΩ·cm |
| Example 1 | 0.0031 | 0.56 | 0.47 | 0.55 | 6.0 | 71 | 89.7 | 18 | 0.328 | 2.2 |
| Example 2 | 0.0044 | 0.81 | 0.81 | 0.47 | 9.5 | 43 | 89.7 | 20 | 0.314 | 2.2 |

(continued)

| | Maximum value of cross-section areas of largest voids | Ratio of void in left column relative to particle cross-section area | Largest void area ratio | Particle cross-section area (average value) | Void ratio (average value) | Number of voids | Silver content in paste | Printable line width | Aspect ratio | Volume resistivity |
|---|---|---|---|---|---|---|---|---|---|---|
| | 2 μm | % | % | 2 μm | % | Voids | % | μm | - | μΩ·cm |
| Comparative Example 1 | 0.0020 | 0.39 | 0.36 | 0.50 | 7.2 | 103 | 89.7 | 30 | 0.293 | 2.3 |
| Comparative Example 2 | 0.0061 | 1.05 | 0.98 | 0.59 | 12.2 | 82 | 89.7 | 30 | 0.310 | 2.2 |
| Conventional Example | 0.0058 | 0.41 | 0.41 | 1.41 | 4.4 | 90 | 89.7 | 26 | 0.262 | 2.6 |

It can be seen from the results shown in Tables 1 and 2 that increased aspect ratio, reduced printable line width, and reduced volume resistivity are observed for electrode wiring with conductive pastes in which the silver powders of Example 1 and Example 2 are used as compared to each Comparative Example and Conventional Example, and thus it can be seen that the conductive pastes in which the silver powders of Example 1 and Example 2 are used are excellent conductive pastes. Moreover, the apparent density of the silver powder of the Conventional Example, which has circular voids such as illustrated in FIG. 12, is 9.8 g/cm$^3$, and thus was within a range of not less than 9.3 g/cm$^3$ and not more than 9.8 g/cm$^3$. It can also be seen that the silver powders of the Examples had more voids and smaller apparent density than the conventional silver powder. Moreover, it can be seen with reference to FIGS. 4 to 11 that particularly in Examples 1 and 2, silver particles in the silver powder include voids while also having smoothed unevenness. This is consistent with an evaluation result that particle surfaces are smoothed and L1/L2 is reduced due to a surface smoothing step being performed by stirring in Examples 1 and 2.

In contrast, although the median diameter, Ig-Loss, and apparent density in Comparative Example 1, for example, do not significantly differ from values in Example 1, Example 1 has a printable line width that is 2/3 or less than that in Comparative Example 1 and also has an aspect ratio of more than 0.3. With regards to the value of L1/L2, which indicates surface unevenness, this value is 2.7 in Comparative Example 1 and thus differs by a factor of 2 or more from Example 1 in which this value is 1.1. The reason for this is presumed to be that the silver powder of Comparative Example 1, which has not undergone surface smoothing, has numerous projections at the surfaces of silver particles in the silver powder compared to the silver powder of Example 1, thus resulting in higher viscosity when the silver powder of Comparative Example 1 is used as a paste. Accordingly, this paste is not suitable for discharge from a thin nozzle and is not suitable for printing using such a nozzle. In other words, the silver powder of Comparative Example 1 is not suitable for an application in which the line width of electrode wiring is reduced. Likewise, although Example 2 and Comparative Example 2 do not significantly differ in terms of median diameter and Ig-Loss, Example 2 has a printable line width that is 2/3 of that in Comparative Example 2 and also has an aspect ratio of more than 0.3.

The results of Experimental Example 1 are thought to demonstrate that by performing a surface smoothing step in the Examples, unevenness of particle surfaces is reduced, L1/L2 is reduced, and, as a result, an excellent conductive paste is obtained. Note that it can be seen through comparison of Example 1 with Comparative Example 1 and Example 2 with Comparative Example 2 that Examples 1 and 2 have a larger apparent density and a smaller void ratio. This is thought to be due to partial squashing of voids and reduction of void volume caused by collisions between particles during smoothing of unevenness of particle surfaces in the surface smoothing step.

[Experimental Example 2]

(Example 3)

Silver nitrate aqueous solution in an amount of 3,556.2 g (silver content: 31.98 wt%) was diluted with 66,140.5 g of pure water. The diluted silver nitrate aqueous solution was stirred while adding 10,124.9 g of citric acid aqueous solution (citric acid concentration: 20 wt%). Thereafter, 113.7 g (0.5 wt% relative to silver) of polyethyleneimine (produced by Junsei Chemical Co., Ltd.; average molecular weight: approximately 600; 5 wt% aqueous solution) was added as a particle size adjuster.

The liquid temperature was then set to 20°C, and ascorbic acid aqueous solution (1,021 g of ascorbic acid reagent diluted with 4,084 g of pure water) was added as a reductant. At 1 minute after addition of the reductant, stearic acid diluted 10-fold with ethanol was added as a surface treatment agent such that the amount of stearic acid relative to silver was 1.8 wt%. Thereafter, 3 minutes of stirring was performed to yield a suspension containing silver particles.

Next, the stirring was stopped, and the suspension containing the silver particles was filtered using a pressurized filter. The filtered off silver particles were water washed by passing washing water through the obtained silver particles until the electrical conductivity of washings reached 0.5 mS/m or less. The washed silver particles were subsequently vacuum dried at 73 °C for 10 hours to obtain a dry powder.

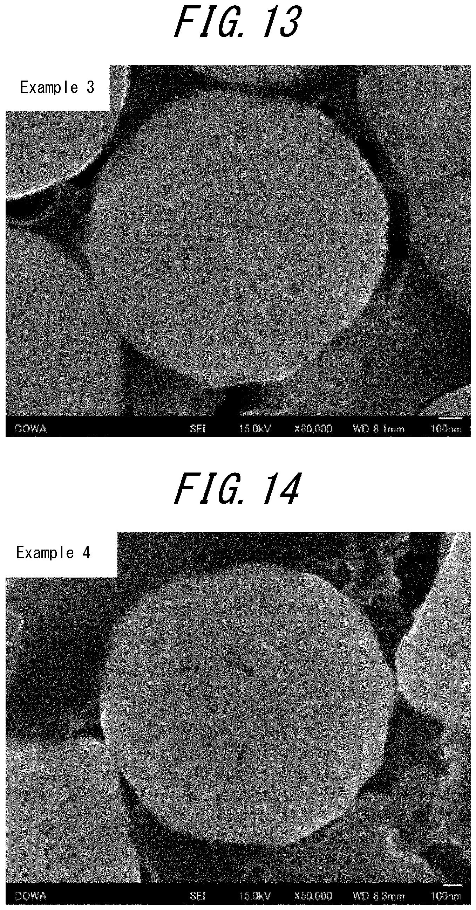

In addition, a surface smoothing step was performed by loading the dry powder into a sample mill (SK-M10 produced by Kyoristu Riko) and performing two repetitions of stirring for 30 seconds so as to obtain a silver powder as a collection of silver particles according to Example 5. An SEM observation image at ×60,000 for a particle cross-section of a silver particle in the obtained silver powder is presented in FIG. 13.

(Example 4)

A silver powder according to Example 4 was obtained in the same way as in Example 3 with the exception that the liquid temperature of the mixed liquid was set as 28°C. An SEM observation image at ×50,000 for a particle cross-section of a silver particle in the obtained silver powder is presented in FIG.14.

(Silver powder evaluation)

In Experimental Example 2, evaluations of the silver powders according to Example 3 and Example 4 were performed by the previously described methods in the same way as in Example 1 in Experimental Example 1.

(Conductive paste evaluation)

In Experimental Example 2, evaluations of characteristics of conductive pastes for silver powders of Example 3, Example 4, and the Conventional Example were performed as described below.

First, 89.7 mass% of an obtained silver powder, 2.0 mass% of glass frit (FSGCO2 produced by Okamoto Glass Co., Ltd.), 0.4 mass% of oleic acid as a dispersant, 0.2 mass% of a mixture of ethyl cellulose and hydroxypropyl cellulose as a resin, 6.2 mass% of a mixture of terpineol, texanol, and butyl carbitol acetate as a solvent, 1.1 mass% of hydrogenated castor oil as a thixotropic agent, and 0.4 mass% of dimethylpolysiloxane as a line shape retaining agent were kneaded in a propeller-less planetary stirring and defoaming device (AR250 produced by Thinky Corporation), were then kneaded by a three-roll mill (80S produced by Exakt Technologies Inc.), and were subsequently passed through a 500 $\mu$m mesh to obtain a conductive paste. Moreover, the viscosity of the conductive paste was measured, and in a case in which the viscosity was more than 100 Pa·s, the above-described mixture of solvents (mixture of terpineol, texanol, and butyl carbitol acetate) was added to the obtained conductive paste in an amount necessary to yield a conductive paste having a viscosity adjusted to within a range of 50 Pa·s to 100 Pa·s.

A value measured using a rotational viscometer can be adopted as the viscosity of the conductive paste. In the present embodiment, the viscosity was measured under the following conditions using a DV-III produced by Brookfield Engineering as a viscometer. In measurement of viscosity using a DV-III produced by Brookfield Engineering in the present embodiment, a CP-52 cone was used as a rotor. The measurement temperature was set as 25°C, and the rotor speed was set as 5 rpm. A value at a point after 1 minute of rotation of the rotor was adopted as a value for viscosity.

The obtained conductive paste was used to print 10 electrode wires on a silicon wafer by screen printing with a line length of 150 mm for each of line widths of 10 $\mu$m, 12 $\mu$m, 14 $\mu$m, 16 $\mu$m, 18 $\mu$m, and 20 $\mu$m using a test screen having these widths. The obtained wiring was dried under conditions of 5 minutes at 200°C using an air circulation dryer (DK-43 produced by Yamato Scientific Co., Ltd.) and was subsequently fired under conditions of a peak temperature of 750°C and an in-out time of 21 seconds using a high-speed firing test furnace produced by NGK Insulators, Ltd. to produce a conductive film. A digital multimeter (7451A produced by ADCMT) was used to measure a resistance value ($\Omega$) for the obtained conductive film. Since large variation of resistance values indicates that there is large variation of line width and absence of printing in some locations, printing suitable for electrode wiring was judged to be possible in a case in which the size of an interquartile range (= third quartile - first quartile) of resistance values for the 10 electrode wires of a certain line width was 5 $\Omega$ or less. The interquartile range refers to a value that is determined by taking the minimum and maximum values among measured values for the 10 electrode wires to be 0% and 100%, respectively, determining a value for 75% (third quartile) and a value for 25% (first quartile) by calculation, and subtracting the calculated first quartile from the calculated third quartile. The thinnest line width at which suitable printing was possible was confirmed, and this line width was recorded as the printable line width.

With respect to a conductive film that was obtained through printing with a line width of 20 $\mu$m, line width, height, and cross-section area were measured using a laser microscope (VK-X1000 produced by Keyence Corporation). The volume resistivity of the conductive film was calculated from the determined resistance value and cross-section area using the previously described calculation equation (Equation 2).

Evaluations for the silver powders of Example 3 and Example 4 and the silver powder of the Conventional Example are shown in Tables 3 and 4.

[Table 3]

| | Reaction temperature | Dry surface processing | Median diameter ($D_{50}$) | Ig-Loss | Apparent density | Crystallite size (Dx) | Length L1 | Length L2 | L1/L2 (ratio of lengths) |
|---|---|---|---|---|---|---|---|---|---|
| | °C | - | $\mu$m | wt% | g/cm3 | nm | $\mu$m | $\mu$m | - |
| Example 3 | 20 | Yes | 1.4 | 2.7 | 8.8 | 17.50 | 5.8 | 4.6 | 1.27 |
| Example 4 | 28 | Yes | 1.6 | 2.9 | 8.6 | 25.8 | 7.3 | 5.6 | 1.31 |
| Conventional Example | 28 | Yes | 2.0 | 0.7 | 9.8 | 33.2 | 4.3 | 4.3 | 1.0 |

[Table 4]

| | Maximum value of cross-section areas of largest voids | Ratio of void in left column relative to particle cross-section area | Largest void area ratio | Particle cross-section area (average value) | Void ratio (average value) | Number of voids |
|---|---|---|---|---|---|---|
| | $\mu$m$^2$ | % | % | $\mu$m$^2$ | % | Voids |
| Example 3 | 0.0034 | 0.28 | 0.18 | 1.30 | 5.6 | 154 |
| Example 4 | 0.0170 | 0.69 | 0.68 | 1.79 | 8.1 | 121 |
| Conventional Example | 0.0058 | 0.41 | 0.41 | 1.41 | 4.4 | 90 |

Evaluation results for the pastes of Example 3 and Example 4 and a paste of the Conventional Example are shown in Table 5.

[Table 5]

| | Silver content in paste | Viscosity 5 rpm | Interquartile range of resistance values | | | | | Printable line width | Volume resistivity 20 $\mu$m line width |
|---|---|---|---|---|---|---|---|---|---|
| | | | 10 $\mu$m line width | 12 $\mu$m line width | 14 $\mu$m line width | 16 $\mu$m line width | 18 $\mu$m line width | | |
| | % | Pa·s | $\Omega$ | $\Omega$ | $\Omega$ | $\Omega$ | $\Omega$ | $\mu$m | $\mu\Omega\cdot$cm |
| Example 3 | 88.9 | 59 | 10.4 | 2.0 | 1.5 | 1.3 | 1.3 | 12 | 1.71 |
| Example 4 | 88.9 | 73 | 14.1 | 15.2 | 3.2 | 1.2 | 1.3 | 14 | 1.80 |
| Conventional Example | 89.8 | 55 | 15.0 | 30.8 | 24.4 | 9.5 | 1.5 | 18 | 2.98 |

It can be seen from the results of Experimental Example 2 that upon comparison of Examples 3 and 4 with the Conventional Example, silver powders of the Examples enable the provision of a silver powder that when used as a conductive paste, has low tendency to experience disconnection even with reduced line width and has lower volume resistivity than is conventionally the case, a conductive paste containing such a silver powder as a conductive filler, and a method of producing such a silver powder.

[Experimental Example 3]

(Example 5)

In production of a paste, a silver powder A having an apparent density of 9.965 g/cm$^3$, a median diameter (D50) of 2.0 $\mu$m, a crystallite size of 38 nm, and an Ig-Loss of 0.6% was prepared. The silver powder obtained in Example 3 was then added in an amount of 20 wt% to the silver powder A and was mixed therewith to obtain a silver powder of Example 5. A conductive paste was produced for this silver powder in the same way as in Example 3 with the exception that viscosity was evaluated using a rheometer.

(Comparative Example 3)

A silver powder according to Comparative Example 3 was obtained in the same way as in Example 5 with the exception that the silver powder obtained in Example 3 was not added.

(Conductive paste evaluation)

The viscosities of conductive pastes according to Example 5 and Comparative Example 3 in Experimental Example 3 were measured under the following conditions using a rotational rheometer (MARS60 produced by Thermo Fisher Scientific). A C35 2°/Ti was used as a rotor, the measurement temperature was set as 25°C, the shear stress was increased exponentially from 10 Pa to 1,000 Pa over 100 seconds, and the shear rate was measured. The viscosity was calculated according to: shear stress [Pa] ÷ shear rate [1/s] = viscosity [Pa·s].

The printable line width was confirmed through the interquartile range of resistance values at each line width in the same way as in Example 3. The volume resistivity was evaluated in the same way as in Example 3 using a conductive film obtained through printing with a line width of 12 $\mu$m.

Evaluation results for pastes of Example 5 and Comparative Example 3 are shown in Table 6.

[Table 6]

| | Silver content in paste | Viscosity | Interquartile range of resistance values | | Printable line width | Volume resistivity |
| --- | --- | --- | --- | --- | --- | --- |
| | | 4 S$^{-1}$ | 10 $\mu$m line width | 12 $\mu$m line width | | 12 $\mu$m line width |
| | % | Pa·s | Ω | Ω | $\mu$m | $\mu$Ω·cm |
| Example 5 | 88.7 | 67 | 1.4 | 1.5 | <10 | 1.65 |
| Comparative Example 3 | 88.7 | 75 | 12.1 | 0.9 | 12 | 1.98 |

The results of Experimental Example 3 demonstrate that the printable line width can be reduced and an effect of lowering volume resistivity is displayed even when the silver powder according to the present disclosure is mixed with another silver powder having a large apparent density. In a situation in which the silver powder according to the present disclosure is mixed with another silver powder, the amount of the silver powder according to the present disclosure that is mixed can be set as appropriate and can, for example, be set as 1 wt% to 50 wt%.

INDUSTRIAL APPLICABILITY

As set forth above, the silver powder according to the present disclosure enables the provision of a silver powder that when used as a conductive paste, has low tendency to experience disconnection even with reduced line width and has lower volume resistivity than is conventionally the case, a conductive paste containing such a silver powder as a conductive filler, and a method of producing such a silver powder.

REFERENCE SIGNS LIST

10　　particle perimeter
20　　line circumscribing periphery
30　　convex hull perimeter
31　　convex hull perimeter of deep recessed part
32　　convex hull perimeter of shallow recessed part
35　　perpendicular line
41　　parallel line

**Claims**

1. A silver powder comprising a collection of silver particles, wherein

   the silver powder has an apparent density of not less than 8.2 g/cm$^3$ and not more than 9.2 g/cm$^3$, and
   a value of not less than 1.1 and not more than 1.4 for a ratio of length of a perimeter in a particle cross-section for the silver particles and length of a line circumscribing a periphery of the particle cross-section.

2. The silver powder according to claim 1, having a largest void area ratio of not less than 0.1% and not more than 1.0%.

3. The silver powder according to claim 1, wherein total area of voids observed in the particle cross-section for the silver particles is 5% or more of cross-section area of the particle cross-section.

4. The silver powder according to claim 1, having a volume-based median diameter of not less than 0.6 $\mu$m and not more than 2.0 $\mu$m.

5. The silver powder according to claim 1, having an ignition loss of not less than 1.0 wt% and not more than 3.0 wt%.

6. The silver powder according to claim 1, having a silver crystallite size of not less than 10 nm and not more than 28 nm.

7. A conductive paste comprising the silver powder according to any one of claims 1 to 6 as a conductive filler.

8. A method of producing a silver powder comprising:

   a feedstock mixing step of mixing a silver aqueous solution, a polycarboxylic acid, and a surface treatment agent to obtain a mixed liquid;
   a particle precipitation step of adding a reductant to the mixed liquid to cause precipitation of silver particles;
   a drying step of drying a collection of the silver particles to obtain a dry powder; and
   a surface smoothing step of partially smoothing surfaces of the silver particles after drying to obtain a silver powder, wherein
   in the surface smoothing step, the surfaces of the silver particles are smoothed until apparent density is not less than 8.2 g/cm$^3$ and not more than 9.2 g/cm$^3$ and a ratio of length of a perimeter in a particle cross-section and length of a line circumscribing a periphery of the particle cross-section is not less than 1.1 and not more than 1.4.

9. A method of producing a silver powder comprising:

   a feedstock mixing step of mixing a silver aqueous solution, a polycarboxylic acid, and a particle size adjuster to obtain a mixed liquid;
   a particle precipitation step of adding a reductant to the mixed liquid to cause precipitation of silver particles;
   a drying step of drying a collection of the silver particles to obtain a dry powder; and
   a surface smoothing step of partially smoothing surfaces of the silver particles after drying to obtain a silver powder, wherein
   in the surface smoothing step, the surfaces of the silver particles are smoothed until apparent density is not less than 8.2 g/cm$^3$ and not more than 9.2 g/cm$^3$ and a ratio of length of a perimeter in a particle cross-section and length of a line circumscribing a periphery of the particle cross-section is not less than 1.1 and not more than 1.4.

10. The method of producing a silver powder according to claim 8 or 9, wherein a liquid temperature in the particle precipitation step is not lower than 10°C and not higher than 35°C.

11. The method of producing a silver powder according to claim 8 or 9, wherein the dry powder prior to the surface smoothing step has an apparent density of less than 9.2 g/cm$^3$ and a value of more than 1.4 for a ratio of length of a particle perimeter relative to length of a line circumscribing a particle periphery in a particle cross-section.

12. A mixed silver powder in which the silver powder according to any one of claims 1 to 6 and a silver powder having an apparent density of more than 9.2 g/cm$^3$ are mixed.

13. A conductive paste comprising the mixed silver powder according to claim 12 as a conductive filler.

## FIG. 1

## *FIG. 2*

## *FIG. 3*

## FIG. 4

Example 1

## FIG. 5

Example 1

# FIG. 6

Example 2

# FIG. 7

Example 2

## *FIG. 8*

Comparative Example 1

## *FIG. 9*

Comparative Example 1

## FIG. 10

Comparative
Example 2

## FIG. 11

Comparative
Example 2

# FIG. 12

Conventional Example

DOWA    SEI    15.0kV    X40,000    100nm    WD 8.4mm

## FIG. 13

Example 3

DOWA    SEI    15.0kV    X60,000    WD 8.1mm    100nm

## FIG. 14

Example 4

DOWA    SEI    15.0kV    X50,000    WD 8.3mm    100nm

| INTERNATIONAL SEARCH REPORT | International application No. |
|---|---|
| | **PCT/JP2022/036032** |

**A. CLASSIFICATION OF SUBJECT MATTER**

*B22F 1/00*(2022.01)i; *B22F 1/05*(2022.01)i; *B22F 1/06*(2022.01)i; *B22F 1/103*(2022.01)i; *B22F 9/00*(2006.01)i;
*B22F 9/24*(2006.01)i; *H01B 1/00*(2006.01)i; *H01B 1/22*(2006.01)i; *H01B 5/00*(2006.01)i; *H01B 13/00*(2006.01)i
FI: B22F1/00 K; B22F1/06; B22F9/24 E; B22F9/24 F; H01B1/22 A; B22F1/103; B22F1/05; B22F9/00 B; H01B5/00 A;
H01B1/00 A; H01B13/00 501Z

According to International Patent Classification (IPC) or to both national classification and IPC

**B. FIELDS SEARCHED**

Minimum documentation searched (classification system followed by classification symbols)

B22F1/00; B22F1/05; B22F1/06; B22F1/103; B22F9/00; B22F9/24; H01B1/00; H01B1/22; H01B5/00; H01B13/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-193795 A (DOWA MINING CO., LTD.) 27 July 2006 (2006-07-27)<br>entire text | 1-13 |
| A | JP 2012-251208 A (SUMITOMO METAL MINING CO., LTD.) 20 December 2012 (2012-12-20)<br>entire text | 1-13 |
| A | KR 10-2018-0121190 A (DAE JOO ELECTRONIC MATERIALS CO., LTD.) 07 November 2018 (2018-11-07)<br>entire text | 1-13 |
| A | WO 2014/038611 A1 (NAMICS CO.) 13 March 2014 (2014-03-13)<br>entire text | 1-13 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/036032**

| Patent document cited in search report | | | Publication date (day/month/year) | Patent family member(s) | | | Publication date (day/month/year) |
|---|---|---|---|---|---|---|---|
| JP | 2006-193795 | A | 27 July 2006 | (Family: none) | | | |
| JP | 2012-251208 | A | 20 December 2012 | (Family: none) | | | |
| KR | 10-2018-0121190 | A | 07 November 2018 | CN | 108788175 | A | |
| WO | 2014/038611 | A1 | 13 March 2014 | US | 2015/0218391 | A1 | |
| | | | | TW | 201419312 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012063747 A1